Europäisches Patentamt

European Patent Office

Office européen des brevets

(11) Publication number: **0 310 204**

**A1**

(12) **EUROPEAN PATENT APPLICATION**

(21) Application number: **88202174.4**

(22) Date of filing: **03.10.88**

(51) Int. Cl.:4 **B60D 1/00 , B60R 9/06**

(30) Priority: **02.10.87 NL 8702358**

(43) Date of publication of application:
**05.04.89 Bulletin 89/14**

(84) Designated Contracting States:
**AT BE CH DE ES FR GB IT LI LU NL SE**

(71) Applicant: **KONINKLIJKE NEDERLANDSE TOERISTENBOND ANWB**
**Wassenaarseweg 220**
**NL-2596 EC Den Haag(NL)**

(72) Inventor: **Keessen, Robert**
**Obrechtrode 4**
**NL-2717 DD Zoetermeer(NL)**

(74) Representative: **Baarslag, Aldert D. et al**
**Nederlandsch Octrooibureau Johan de Wittlaan 15 P.O. Box 29720**
**NL-2502 LS Den Haag(NL)**

(54) **Carrier for the disconnectable attachment to the stationary part of a detachable towing bracket.**

㊐ The present invention relates to a carrier (7) for detachably fastening to a tow hook attachment (2), and provided with coupling means (9, 14) which can engage with the coupling of the tow hook part (4) of a detachable tow hook attachment (2).

fig-2

EP 0 310 204 A1

**Carrier for the disconnectable attachment to the stationary part of a detachable towing bracket.**

The present invention relates to a carrier for detachably fastening to a tow hook attachment, and provided with coupling means which can engage with the coupling of the tow hook part of a detachable tow hook attachment.

Such a carrier is known from US-A-3,853,255. Here a tow hook attachment of a vehicle comprises a part fixed to the vehicle and a detachable part to which the tow ball can be fastened. Taking away the detachable tow ball part leaves a recess in which the carrier can be accommodated. This carrier can be, for example, a carrier for bicycles. This recess is a square tubular section into which a corresponding section of the carrier is pushed and then secured by means of a pin. This attachment with carrier has at least two disadvantages, which do not apply to the combination of part fixed to the vehicle and ball part. The first is that the connection between carrier and the part fixed to the vehicle has little torsional rigidity. When the ball part is used this is not important, because the ball in principle has to take only tensile and pressure forces, and not torsional forces. However, when considerable weight is placed on the carrier at a considerable distance from the centre line of the tow hook part which is fastened to the vehicle, these torsional forces play a considerable role. For that reason, in the design according to the above-mentioned US Patent Specification when the speed and load are fairly high, movements of the carrier relative to the vehicle will occur, something which is, of course, inadmissible. A second disadvantage concerns the problem with regard to the fitting of the carrier on the tow hook part. Although the weight of the ball and the section connected to it is relatively low, so that fitting in the fixed tow hook part of the vehicle is relatively problem-free, when the carrier is bulkier and heavier, centring of the two tubular sections fitting closely into each other is a major problem.

The object of the present invention is to avoid these disadvantages.

This object is achieved in a carrier of the type described above in that the coupling means comprise the part of a dovetail joint provided with slots, with said slots tapering upwards when the carrier is fitted.

It has, surprisingly, been found that use of the dovetail joint produces both a very torsionally rigid coupling between the tow hook part fixed to the vehicle and the carrier and a simple self-centring coupling facility between the carrier and the tow hook part.

It is pointed out that a detachable tow hook is known from WO 84/03666, comprising a tow hook part which is fixed to the vehicle and a detachable ball part, the connection being made by a dovetail joint. However, the object was never to provide a connection in which the ball part absorbs torsional forces. For these forces do not occur at all during the operation of such a tow ball. Besides, as already indicated above, in the case of tow balls there is no problem of difficult centring relative to the fixed tow hook part, as is the case when carriers are used. It was therefore found particularly surprising that with the use of a dovetail joint such as that known from the above-mentioned publication WO 84/03666 the special features according to the invention were obtained.

According to an advantageous embodiment, the coupling means comprise the part of a dovetail joint provided with slots, and said slots are designed so that they taper upwards towards each other in the fitted state. With such an embodiment the carrier can be fitted on the tow hook part of a detachable tow hook attachment such as that described in NL-A-8300996. It has already been found in practice that the coupling of this tow hook attachment is extremely satisfactory, so that combination with the carrier according to the invention becomes attractive. Like the detachable ball described in the above-mentioned patent application, the carrier according to the present invention can be provided with a pin with a conical end, said pin being forced resiliently into a locking position. If the tow hook part is provided with a corresponding aperture, locking between the carrier and the tow hook part can be provided in a simple and effective manner. For further securing the pin lying essentially in the movement plane of fitting can form an acute angle relative to the direction of movement of fitting of the carrier on the tow hook part.

According to another advantageous embodiment, the pin is provided with screw thread, engaging with screw thread of the carrier part. As in the case of the embodiment described above, the pin is provided with a tapering end and is fitted in such a way that when the carrier is fitted said pin can be slotted into a bore in the coupling of the tow hook part. This means that there is no longer any dependence on the spring force which is used in the design described above. Such a screw connection is found to be of considerable importance in particular when there is a considerable load on the carrier at a considerable distance from the fixed tow hook part, and when there is considerable moment. This gives more of an indication that the problem occurring here is totally different from that described in the above-mentioned PCT application.

According to yet another advantageous embodiment, the carrier comprises a bicycle rack. It goes without saying that, apart from a bicycle rack, the carrier can be all kinds of other structures adapted to the intended task.

The invention will be explained below in greater detail with reference to an example of an embodiment shown in the drawing, in which:

Fig. 1 shows a side view of a car provided with a detachable tow hook attachment;

Fig. 2 shows a schematic view of the tow hook part of the detachable tow hook attachment shown in Fig. 1 and a carrier according to the invention;

Fig. 3 shows a cross section of the coupling between carrier and tow hook part, in the combined state;

Fig. 4 shows the embodiment of the carrier as bicycle rack; and

Fig. 5 shows a detail of a further embodiment of the coupling between carrier and tow hook part.

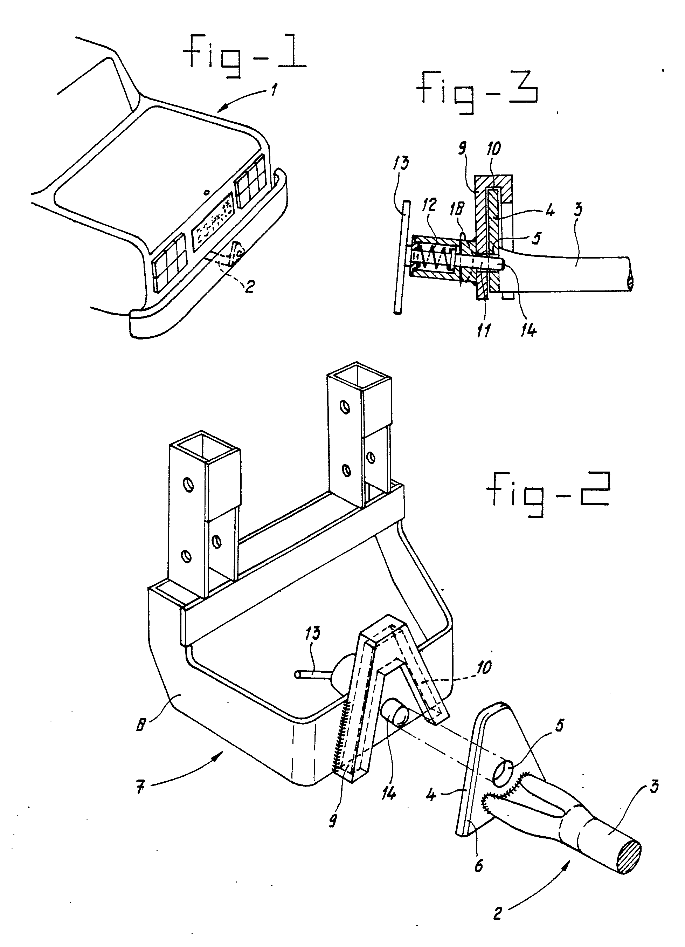

Fig. 1 shows the rear side 1 of a car. It is provided with the tow hook part 2 of a detachable tow hook attachment. In order to make the tow hook complete, the ball part not shown must be fitted thereon.

Fig. 2 shows said tow hook part 2 in greater detail. It comprises a section 3 to the end of which a triangular plate 4 is welded. Said triangular plate 4 is provided with an aperture 5. At the side of the triangular plate 4 facing the section 3 it is provided with a bevelled part 6.

The carrier part according to the invention is indicated in its entirety by 7. It comprises a structure 8 for fastening of, for example, a bicycle rack. A plate 9 is fixed to structure 8, for example by welding. Said plate 9 is provided on the inside with slots 10 whose shape corresponds to the edge of plate 4. Said slots 10 open downwards, so that the slots 10 can be made to engage with the plate 4. The structure is also provided with a pin 11. By means of the design shown in Fig. 3, this pin 11 can be moved inwards against the force of a spring 12 by operation of handle 13, so that on placing of carrier part 7 on plate 4 it can slide downwards. A self-clamping action of carrier part 7 on plate 4 is provided through the tapering of the end 14 of pin 11. A very rigid connection between carrier part 7 and rod 3 is produced partly through the dovetail engagement of plate 4 and carrier part 7.

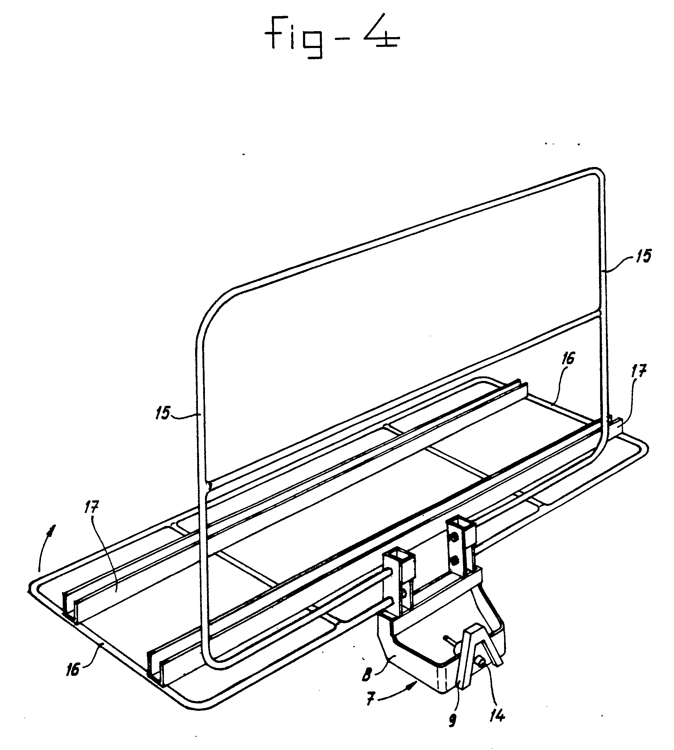

In Fig. 4, by way of example, structure 8 of the carrier 7 is shown in the form of a bicycle rack. This bicycle rack when assembled comprises vertical rails 15 and horizontal, collapsible bars 16. The bars 16 are fitted with troughs 17 in which the wheels of the bicycles to be transported can be fastened.

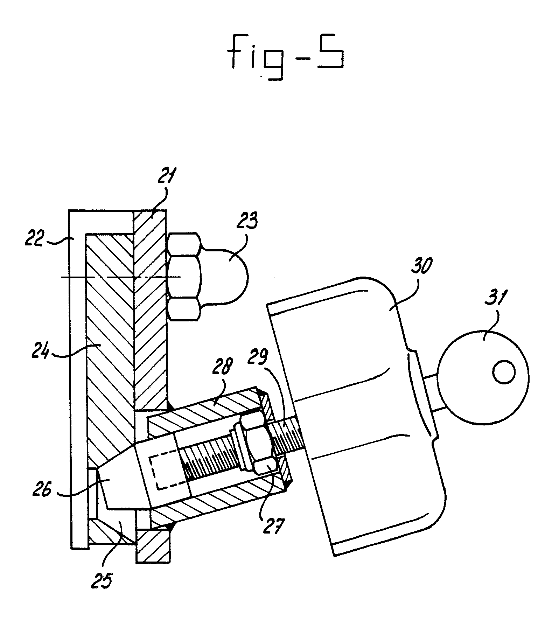

Fig. 5 shows another embodiment of the carrier, which is not further illustrated. Plate 21 is connected here to said carrier, which is not shown. It is connected to closing block 22 in which a dovetailed slot is bounded in the same way as that shown in Fig. 2. The closing block is retained on plate 21 by means of a bolt connection of which nut 23 is shown. As in the earlier embodiments, a triangular so-called delta plate 24 is fitted in the slot on the part of the tow hook attachment fixed on the vehicle. This triangular part is provided with an aperture 25 into which a tapering pin 26 can be inserted. Unlike the earlier embodiment, in which the pin 26 was moved inwards through spring force, a screw attachment is now used. For this, a permanently locking nut 27 fixed to sleeve 28 is provided. A part 29 which is provided with screw thread and is connected at one side to pin 26 and can be detachably connected to turning knob 30 at the other side in a manner not illustrated can engage therewith. The engagement or non-engagement of knob 30 and screw threaded part 29 is achieved by means of the lock (not shown), the key of which is indicated by 31. This design prevents a situation in which in very extreme conditions the spring force applied to the pin, shown in the earlier embodiments, is overcome through torsional forces, with the result that the carrier part could possibly move or even come loose. A particularly firm connection is obtained with the design according to Fix. 5, and the user can feel very well when full engagement takes place.

It goes without saying that the other devices can be connected to the structure 8. An example, which is not restricting, is that provision can be made for the carriage of a spare wheel and wheelchairs. The structure can also be connected to a luggage rack, doghouse or picnic stove. It must also be understood that, although the design described above is preferred, the carrier according to the invention can be used with any tow hook part of a detachable tow hook attachment. In another embodiment of the detachable tow hook attachment the coupling means to the end of the tow hook part of the vehicle will have to be adapted accordingly.

It is now possible to use the carrier according to the invention on tow hook parts of various vehicles, but of course with the same coupling on the tow hook part.

## Claims

1. Carrier for detachably fastening to a tow hook attachment, and provided with coupling means which can engage with the coupling of the tow hook part of a detachable tow hook attachment, characterized in that the coupling means comprise the part of a dovetail joint provided with slots, with said slots tapering upwards when the attachment is fitted.

2. Carrier according to Claim 1, provided with a pin which is driven under spring tension into the locked position, which is provided with a tapering end and is fitted in such a way that when the carrier is fitted this pin can be engaged in a bore in the coupling of the tow hook part.

3. Carrier according to Claim 2, in which the pin lies essentially in the movement plane of fitting and forms an acute angle relative to the direction of movement of fitting of the carrier on the tow hook part.

4. Carrier according to Claim 1, provided with a pin which with a screw connection is driven into the locked position, which is provided with a tapering end and is fitted in such a way that when the carrier is fitted this pin can be engaged in a bore in the coupling of the tow hook part.

5. Carrier according to one of the preceding claims, in which it comprises a bicycle rack.

fig-1

fig-3

fig-2

Fig - 4

# fig-5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y,D | US-A-3 853 255 (J. SPENCER) <br> * Column 1, lines 21-39; figures 1-4 * | 1-3,5 | B 60 D 1/00 <br> B 60 R 9/06 |
| Y | WO-A-8 403 666 (TOBOMADE) <br> * Whole document * & NL-A-83 00 996 <br> (Cat. D) | 1-3,5 | |
| A | US-A-4 620 736 (F. BEST) <br> * Column 1, lines 24-43; figures 1-5 * | 1-2 | |
| A | FR-A-2 348 073 (OUTICOT INDUSTRIE) <br> * Page 4, lines 8-15; page 4, line 37 - <br> page 5; line 5, figures 10,15 * | 1,4 | |
| A | GB-A-1 497 122 (O. RIEHLE) <br> * Page 2, lines 103-117; page 3, lines <br> 34-57; figures 3,6 * | 1,4 | |

TECHNICAL FIELDS SEARCHED (Int. Cl.4)

B 60 D
B 60 R

The present search report has been drawn up for all claims

| Place of search | Date of completion of the search | Examiner |
|---|---|---|
| THE HAGUE | 05-01-1989 | LINTZ C.H. |